(19) **Europäisches Patentamt**
**European Patent Office**
**Office européen des brevets**

(11) **EP 4 144 814 B1**

(12) **EUROPEAN PATENT SPECIFICATION**

(45) Date of publication and mention
of the grant of the patent:
**20.11.2024 Bulletin 2024/47**

(21) Application number: **21826399.4**

(22) Date of filing: **19.05.2021**

(51) International Patent Classification (IPC):
*C09J 151/04* (2006.01)   *B60C 1/00* (2006.01)
*B60C 9/00* (2006.01)   *C09J 11/06* (2006.01)
*D06M 15/693* (2006.01)   *C08F 279/02* (2006.01)

(52) Cooperative Patent Classification (CPC):
(C-Sets available)
**B60C 1/00; B60C 9/0042; C08F 279/02;
C09J 151/04; D06M 15/693**   (Cont.)

(86) International application number:
**PCT/JP2021/019034**

(87) International publication number:
**WO 2021/256149 (23.12.2021 Gazette 2021/51)**

(54) **RUBBER REINFORCING MATERIAL AND METHOD FOR PRODUCING SAME, AND RUBBER ARTICLE**

GUMMIVERSTÄRKUNGSMATERIAL UND VERFAHREN ZUR HERSTELLUNG DAVON UND GUMMIARTIKEL

MATÉRIAU DE RENFORCEMENT POUR CAOUTCHOUC ET SON PROCÉDÉ DE PRODUCTION, ET ARTICLE EN CAOUTCHOUC

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **19.06.2020 JP 2020106169**

(43) Date of publication of application:
**08.03.2023 Bulletin 2023/10**

(73) Proprietor: **Denka Company Limited
Tokyo 103-8338 (JP)**

(72) Inventors:
• **OGUSHI, Hajime**
**Tokyo 103-8338 (JP)**
• **ONOZUKA, Masao**
**Tokyo 103-8338 (JP)**
• **KOBAYASHI, Naoki**
**Tokyo 103-8338 (JP)**
• **ANDO, Ryotaro**
**Tokyo 103-8338 (JP)**

(74) Representative: **Hoffmann Eitle
Patent- und Rechtsanwälte PartmbB
Arabellastraße 30
81925 München (DE)**

(56) References cited:
EP-A1- 0 495 365   EP-A1- 2 426 253
EP-A1- 3 940 002   WO-A1-2013/187364
WO-A1-2020/189456   WO-A1-2020/189456
CN-A- 110 128 970   JP-A- 2014 152 183
JP-A- 2016 525 164   JP-A- H0 570 509

(52) Cooperative Patent Classification (CPC): (Cont.)

C-Sets
**C08F 279/02, C08F 220/06**

**Description**

**Technical Field**

The present invention relates to an adhesive composition for an organic fiber cord, a rubber reinforcing material and a method for producing the same, and a rubber article.

**Background Art**

Conventionally, in the bonding of a tire cord composed of nylon fibers or the like and a rubber composition for a tire, known is a technique of using an RFL (resorcinol-formaldehyde-latex) adhesive containing resorcinol, formaldehyde, and rubber latex, and securing an adhesive force by thermal curing of the adhesive (see, for example, Patent Literatures 1 to 3 below). Furthermore, also known is a technique of using a primary condensate of resorcinol and formaldehyde (see, for example, Patent Literatures 4 and 5 below). Patent Literature 6 relates to an adhesive composition for organic fiber cords, which contains a (blocked) isocyanate compound and/or an amine-based curing agent, an epoxy compound and rubber latex.

**Citation List**

**Patent Literature**

    Patent Literature 1: Japanese Unexamined Patent Publication No. S58-2370
    Patent Literature 2: Japanese Unexamined Patent Publication No. S60-92371
    Patent Literature 3: Japanese Unexamined Patent Publication No. S60-96674
    Patent Literature 4: Japanese Unexamined Patent Publication No. S63-249784
    Patent Literature 5: Japanese Examined Patent Publication No. S63-61433
    Patent Literature 6: European Unexamined Patent Publication EP 2 426 253 A

**Summary of Invention**

**Technical Problem**

Since formaldehyde is an important raw material for cross-linking resorcinol but is suspected of having carcinogenic properties, recently, in consideration of an environmental load (particularly, working environmental load), suppression of releasing to the atmosphere during using and reduction of the used amount are demanded. Furthermore, resorcinol is suspected of being an endocrine disruptor, and reduction of the used amount is demanded. Therefore, it is demanded for an adhesive composition used in an organic fiber cord such as a tire cord to obtain excellent adhesiveness without using resorcinol and formaldehyde.

An object of an aspect of the present invention is to provide an adhesive composition for an organic fiber cord, the adhesive composition having excellent adhesiveness without using resorcinol and formaldehyde. An object of another aspect of the present invention is to provide a rubber reinforcing material using the adhesive composition and a method for producing the same. An object of another aspect of the present invention is to provide a rubber article including the rubber reinforcing material.

**Solution to Problem**

The present inventors have conducted intensive studies, and as a result, have found that the above-described problems can be solved, in the case of using an organic fiber cord, by an adhesive composition containing: a graft copolymer obtained by grafting an ethylenically unsaturated carboxylic acid to a chloroprene polymer; and a surfactant, in which a molar ratio of a content of oxygen atom with respect to a content of chlorine atom in the graft copolymer and a solid content concentration are in specific ranges, thereby completing the present invention.

The invention is defined in the appended claims .

**Advantageous Effects of Invention**

According to an aspect of the present invention, it is possible to provide an adhesive composition for an organic fiber cord, the adhesive composition having excellent adhesiveness without using resorcinol and formaldehyde. In this case, since resorcinol and formaldehyde are not used, an environmental load (particularly, working environmental load) can be reduced. According to another aspect of the present invention, it is possible to provide a rubber reinforcing material using the adhesive composition and a method for producing the same. According to another aspect of the present invention, it is possible to provide a rubber article including the rubber reinforcing material.

**Description of Embodiments**

Hereinafter, the content of the present invention will be specifically described. Embodiments described below are only typical exemplary embodiments of the present invention and the scope of the present invention is not restricted by these at all.

In the present specification, a numerical range that has been indicated by use of "to" indicates the range that includes the numerical values which are described before and after "to", as the minimum value and the maximum value, respectively. "A or more" of the numerical range means A and a range of more than A. "A or less" of the numerical range means A and a range of less than A. In the numerical ranges that are described stepwise in the present specification, the upper limit value or the lower limit value of the numerical range of a certain stage can be arbitrarily combined with the upper limit value or the lower limit value of the numerical range of another stage. In the numerical ranges that are described in the present specification, the upper limit value or the lower limit value of the numerical range may be replaced with the value shown in Examples. "A or B" may include any one of A and B, and may also include both of A and B. Materials listed as examples in the present specification may be used singly or in combinations of two or more kinds thereof, unless otherwise specified. In a case where a plurality of substances corresponding to each component exist in the composition, the content of each component in the composition means the total amount of the plurality of substances that exist in the composition, unless otherwise specified. A "(meth)acrylic acid" means at least one of acrylic acids and corresponding methacrylic acids. The same applies also to other similar expressions such as "(meth)acrylate".

<Adhesive composition>

An adhesive composition of the present embodiment is an adhesive composition for an organic fiber cord (organic fiber cord adhesive composition) containing a graft copolymer P and a surfactant. The graft copolymer P has a chloroprene polymer chain (polychloroprene chain) and a graft chain bonded to the chloroprene polymer chain, the graft chain includes a structural unit derived from an ethylenically unsaturated carboxylic acid (an ethylene-based unsaturated carboxylic acid), a molar ratio of a content of oxygen atom with respect to a content of chlorine atom in the graft copolymer P is 0.04 to 1, and a solid content concentration of the adhesive composition is 10 to 50% by mass.

According to the adhesive composition of the present embodiment, in the case of using an organic fiber cord, excellent adhesiveness can be obtained without using resorcinol and formaldehyde. According to the adhesive composition of the present embodiment, since resorcinol and formaldehyde are not used, an environmental load (particularly, working environmental load) can be reduced. According to the adhesive composition of the present embodiment, excellent adhesiveness can also be obtained rather than the case of using resorcinol and formaldehyde.

The adhesive composition of the present embodiment may be an embodiment not containing resorcinol and formaldehyde, and the content of each of the resorcinol and the formaldehyde may be substantially 0% by mass on the basis of the total amount of the adhesive composition (in terms of solid content). The adhesive composition of the present embodiment can contain a liquid component (for example, a component that is in a liquid state at 23°C) such as water. The adhesive composition of the present embodiment can be used as a water-based adhesive (water-based adhesive composition). The adhesive composition of the present embodiment may be an embodiment not containing an organic solvent, and the content of the organic solvent may be substantially 0% by mass on the basis of the total amount of the adhesive composition (in terms of solid content).

(Graft copolymer P)

The graft copolymer P has a chloroprene polymer chain (polychloroprene chain) and a graft chain bonded to the chloroprene polymer chain, and the graft chain includes a structural unit derived from an ethylenically unsaturated carboxylic acid. The chloroprene polymer chain is a trunk polymer with respect to the graft chain and may be a main chain of the graft copolymer P.

The graft copolymer P can be obtained by grafting (graft polymerizing) an ethylenically unsaturated carboxylic acid to a chloroprene polymer (polychloroprene). That is, a method for producing the graft copolymer P includes a graft polymerization step of grafting (graft polymerizing) an ethylenically unsaturated carboxylic acid to a chloroprene polymer. The method for producing the graft copolymer P may include a chloroprene polymerization step of polymerizing chloroprene to obtain a chloroprene polymer, and in the chloroprene polymerization step, chloroprene and other monomers copolymerizable with chloroprene may be polymerized (copolymerized).

The chloroprene polymer (polychloroprene) of the chloroprene polymer chain has a structural unit derived from chloroprene (2-chloro-1,3-butadiene). The chloroprene polymer is a chloroprene homopolymer, a copolymer of chloroprene and other monomer copolymerizable with chloroprene, or a mixture of these polymers.

The content of the structural unit derived from chloroprene is preferably 50% by mass or more, more than 50% by mass, 70% by mass or more, 90% by mass or more, 95% by mass or more, 98% by mass or more, or 99% by mass or more, on the basis of the whole chloroprene polymer, from the viewpoint of easily obtaining excellent adhesiveness. The chloroprene polymer may be an embodiment composed of the structural unit derived from chloroprene (an embodiment in which substantially 100% by mass of the chloroprene polymer is the structural unit derived from chloroprene).

Examples of the monomer copolymerizable with chloroprene include esters of (meth)acrylic acid (such as methyl (meth)acrylate, butyl (meth)acrylate, and 2-ethylhexyl (meth)acrylate), hydroxy (meth)acrylates (such as 2-hydroxyethyl (meth)acrylate, 2-hydroxymethyl (meth)acrylate, and 2-hydroxypropyl (meth)acrylate), 2,3-dichloro-1,3-butadiene, 1-chloro-1,3-butadiene, butadiene, isoprene, ethylene, styrene, and acrylonitrile.

In the case of using the copolymer of chloroprene and other monomer copolymerizable with chloroprene, as the chloroprene polymer, the copolymerized amount of the other monomer is preferably 50 parts by mass or less and more preferably 30 parts by mass or less with respect to 100 parts by mass of chloroprene. By adjusting the copolymerized amount of the other monomer in these ranges, an effect obtained by copolymerizing these monomers is likely to be exhibited without impairing properties of the adhesive composition.

The other monomer copolymerizable with chloroprene is not limited to one kind, and, for example, three or more kinds of monomers containing chloroprene may be copolymerized. The polymer structure of the chloroprene polymer is not particularly limited. The chloroprene polymer may be a mercaptan-modified chloroprene polymer, a xanthogen-modified chloroprene polymer, a sulfur-modified chloroprene polymer, a dithiocarbonate-based chloroprene polymer, a trithiocarbonate-based chloroprene polymer, a carbamate-based chloroprene polymer, or the like.

The chloroprene polymer can be obtained, for example, by emulsion polymerization of a raw material monomer containing chloroprene as a main component in the presence of a polymerization reaction catalyst, a catalyst-activating agent, a polymerization initiator, a chain transfer agent, or the like. Rosin or the like may be used as an emulsifying dispersant when the chloroprene polymer is obtained.

Examples of the polymerization reaction catalyst include organic peroxides such as ketone peroxides, peroxy ketals, hydroperoxides (such as t-butyl hydroperoxide), dialkyl peroxides, and diacyl peroxides.

Examples of the catalyst-activating agent include sodium sulfite, sodium bisulfite, potassium sulfite, iron (II) oxide, anthraquinone, sodium β-sulfonate, formamidinesulfinic acid, and L-ascorbic acid.

A polymerization initiator is not particularly limited, and it is possible to use a known polymerization initiator which is generally used in the emulsion polymerization of the chloroprene monomer. Examples of the polymerization initiator include inorganic peroxides (such as potassium persulfate, ammonium persulfate, and sodium persulfate), and hydrogen peroxide.

The chain transfer agent is not particularly limited, and it is possible to use a chain transfer agent which is commonly used in emulsion polymerization of chloroprene. Examples of the chain transfer agent include long chain alkylmercaptans such as n-dodecylmercaptan (also known as 1-dodecanethiol), t-dodecylmercaptan, and n-octylmercaptan; xanthogen compounds such as diisopropylxanthogen disulfide and diethylxanthogen disulfide; iodoform; and thiocarbonyl compounds such as benzyl 1-pyrroldithiocarbamate (also known as benzyl 1-pyrrolcarbodithioate), benzylphenyl carbodithioate, 1-benzyl-N,N-dimethyl-4-aminodithiobenzoate, 1-benzyl-4-methoxydithiobenzoate, 1-phenylethylimidazole dithiocarbamate (also known as 1-phenylethylimidazole carbodithioate), benzyl-1-(2-pyrrolidinone)dithiocarbamate (also known as benzyl-1-(2-pyrrolidinone)carbodithioate), benzylphthalimidyl dithiocarbamate (also known as benzylphthalimidyl carbodithioate), 2-cyanoprop-2-yl-1-pyrroldithiocarbamate (also known as 2-cyanoprop-2-yl-1 -pyrrolcarbodithioate), 2-cyanobut-2-yl-1-pyrroldithiocarbamate (also known as 2-cyanobut-2-yl-1-pyrrolcarbodithioate), benzyl-1-imidazole dithiocarbamate (also known as benzyl-1-imidazole carbodithioate), 2-cyanoprop-2-yl-N,N-dimethyl dithiocarbamate, benzyl-N,N-diethyl dithiocarbamate, cyanomethyl-1-(2-pyrrolidone)dithiocarbamate, 2-(ethoxycarbonylbenzyl)prop-2-yl-N,N-diethyl dithiocarbamate, 1-phenyl ethyl dithiobenzoate, 2-phenylprop-2-yldithiobenzoate, 1-aceto-1-yl-ethyl dithiobenzoate, 1-(4-methoxyphenyl)ethyl dithiobenzoate, benzyl dithioacetate, ethoxycarbonylmethyl dithioacetate, 2-(ethoxycarbonyl)prop-2-yldithiobenzoate, 2-cyanoprop-2-yldithiobenzoate, t-butyl dithiobenzoate, 2,4,4-trimethylpenta-2-yldithiobenzoate, 2-(4-chlorophenyl)-prop-2-yldithiobenzoate, 3-vinylbenzyl dithiobenzoate, 4-vinylbenzyl dithiobenzoate, benzyl diethoxyphosphinyl dithioformate, t-butyltrithioperbenzoate, 2-phenylprop-2-yl-4-chlorodithiobenzoate, naphthalene-1 -carboxylic acid-1-methyl-1-phenyl-ethyl ester, 4-cyano-4-methyl-4-thiobenzyl sulfanyl butyric acid, dibenzyl tetrathioterephthalate, carboxymethyl dithiobenzoate, polyethylene oxide) having dithiobenzoate terminal, poly(ethylene oxide) having 4-cyano-4-methyl-4-thiobenzylsulfanyl butyrate terminal, 2-[(2-phenylethanethioyl)sulfanyl]propanoic acid, 2-[(2-phenylethanethioyl)sulfanyl]succinic acid, potassium 3,5-dimethyl-1H-pyrazol-1-carbodithioate, cyanomethyl-3,5-dimethyl-1H-pyrazol-1-carbodithioate, cyanomethyl methyl-(phenyl)dithiocarbamate, benzyl-4-chlorodithiobenzoate, phenyl methyl-4-chlorodithiobenzoate, 4-nitrobenzyl-4-chlorodithiobenzoate, phenyl prop-2-yl-4-chlorodithiobenzoate, 1-cyano-1-methyl ethyl-4-chlorodithiobenzoate, 3-chloro-2-butenyl-4-chlorodithiobenzoate, 2-chloro-2-butenyl dithiobenzoate, benzyl dithioacetate, 3-chloro-2-butenyl-1H-pyrrol-1-dithiocarboxylic acid, 2-cyanobutane-2-yl-4-chloro-3,5-dimethyl-1H-pyrazol-1-carbodithioate, cyanomethyl methyl(phenyl)carbodithioate, 2-cyano-2-propyldodecyl trithiocarbonate, dibenzyl trithiocarbonate, butylbenzyl trithiocarbonate, 2-[[(butylthio)thioxomethyl]thio]propionic acid, 2-[[(dodecylthio)thioxomethyl]thio]propionic acid, 2-[[(butylthio)thioxomethyl]thio] succinic acid, 2-[[(dodecylthio)thioxomethyl]thio] succinic acid, 2-[[(dodecylthio)thioxomethyl]thio]-2-methyl propionic acid, 2,2'-[carbonothioylbis(thio)]bis[2-methyl propionic acid], 2-amino-1-methyl-2-oxoethylbutyl trithiocarbonate, benzyl-2-[(2-hydroxyethyl)amino]-1-methyl-2-oxoethyl trithiocarbonate, 3-[[[(t-butyl)thio]thioxomethyl]thio]propionic acid, cyanomethyldodecyl trithiocarbonate, diethylaminobenzyl trithiocarbonate, and dibutylaminobenzyl trithiocarbonate.

The polymerization temperature is not particularly limited, and the polymerization temperature may be a temperature at which emulsion polymerization is generally performed, and is preferably in a range of 0°C to 50°C and more preferably in a range of 10°C to 50°C. The final polymerization rate of the chloroprene polymer obtained in the aforementioned chloroprene polymerization step is not particularly limited, and it is preferable to arbitrarily adjust within a range of 30 to 100%. In order to adjust the final conversion rate, when the conversion rate becomes a desired value, a polymerization terminator for terminating the polymerization reaction may be added to terminate the polymerization.

The polymerization terminator is not particularly limited, and it is possible to use a polymerization terminator which is commonly used. Examples of the polymerization terminator include thiodiphenylamine, 4-t-butylcatechol, and 2,2-methylenebis-4-methyl-6-t-butylphenol.

The graft copolymer P may be a graft copolymer obtained by grafting a monomer including an ethylenically unsaturated carboxylic acid as a main component to a chloroprene polymer. The graft copolymer P may have a graft chain in which a content of the structural unit derived from an ethylenically unsaturated carboxylic acid is in the following range. The content of the structural unit derived from an ethylenically unsaturated carboxylic acid is 50% by mass or more, more than 50% by mass, 70% by mass or more, 90% by mass or more, 95% by mass or more, 98% by mass or more, or 99% by mass or more, on the basis of the whole graft chain, from the viewpoint of easily obtaining excellent adhesiveness. The graft chain may be an embodiment composed of the structural unit derived from an ethylenically unsaturated carboxylic acid (an embodiment in which substantially 100% by mass of the graft chain is the structural unit derived from an ethylenically unsaturated carboxylic acid). The graft chain may not have a structural unit derived from chloroprene.

Examples of the ethylenically unsaturated carboxylic acid to be grafted to the chloroprene polymer include acrylic acid, methacrylic acid, maleic acid, itaconic acid, and crotonic acid. The ethylenically unsaturated carboxylic acid is not limited to one kind, and two kinds or more thereof can also be used in combination. The ethylenically unsaturated carboxylic acid preferably includes at least one selected from the group consisting of acrylic acid and methacrylic acid, from the viewpoint of easily obtaining excellent adhesiveness.

The graft chain may include a structural unit derived from polyvinyl alcohol and may not include a structural unit derived from polyvinyl alcohol. The graft chain may include a structural unit derived from a styrene-based monomer (for example, styrene) and may not include a structural unit derived from a styrene-based monomer (for example, styrene). The graft chain may include a structural unit derived from a vinyl-based monomer excluding (meth)acrylic acid and may not include a structural unit derived from a vinyl-based monomer excluding (meth)acrylic acid.

The content of a structural unit derived from (meth)acrylic acid (the total amount of a structural unit derived from acrylic acid and a structural unit derived from methacrylic acid; the same applies hereinafter) is preferably 10 parts by mass or more, 20 parts by mass or more, more than 20 parts by mass, 30 parts by mass or more, 50 parts by mass or more, 80 parts by mass or more, 100 parts by mass or more, or more than 100 parts by mass, with respect to 100 parts by mass of the structural unit derived from a vinyl-based monomer excluding (meth)acrylic acid, from the viewpoint of easily obtaining excellent adhesiveness.

The content of the structural unit derived from (meth)acrylic acid is preferably 30% by mass or more, more than 30% by mass, 50% by mass or more, more than 50% by mass, 70% by mass or more, 90% by mass or more, 95% by mass or more, 98% by mass or more, or 99% by mass or more, on the basis of the whole graft chain, from the viewpoint of easily obtaining excellent adhesiveness. The graft chain may be an embodiment composed of the structural unit derived from (meth)acrylic acid (an embodiment in which substantially 100% by mass of the graft chain is the structural unit derived from (meth)acrylic acid).

As a method of grafting an ethylenically unsaturated carboxylic acid to a chloroprene polymer, an emulsion polymerization method is general in which the chloroprene polymer obtained by the aforementioned method and an ethylenically unsaturated carboxylic acid are mixed and the ethylenically unsaturated carboxylic acid is grafted to the chloroprene polymer in the presence of a radical polymerization initiator. Furthermore, a solution polymerization method can also be used in which an ethylenically unsaturated carboxylic acid is added to a solution obtained by dissolving a chloroprene polymer rubber, which is obtained by freeze-drying the chloroprene polymer, in an organic solvent, and the ethylenically unsaturated carboxylic acid is grafted to the chloroprene polymer in the presence of a radical polymerization initiator. As a radical polymerization initiator, for example, potassium persulfate can be used.

The molar ratio of the content of oxygen atom with respect to the content of chlorine atom in the graft copolymer P (the content of oxygen atom/the content of chlorine atom) is 0.04 to 1 (that is, the molar ratio of the chlorine atom and the oxygen atom in the graft copolymer P is 1 : 0.04 to 1 : 1). The molar ratio of the chlorine atom and the oxygen atom indicates the molar ratio of the amount of the chlorine atom contained in the chloroprene polymer and the amount of the oxygen atom contained in the ethylenically unsaturated carboxylic acid and indicates the graft amount of the ethylenically unsaturated carboxylic acid in the graft copolymer P. For example, in order to increase the content of oxygen atom, the amount of the ethylenically unsaturated carboxylic acid to be grafted or the polymerization time may be increased to increase the graft amount of the ethylenically unsaturated carboxylic acid with respect to the chloroprene polymer.

The contents of the chlorine atom and the oxygen atom in the graft copolymer P can be measured by the following method.

(1) The adhesive composition containing the graft copolymer P is frozen at -60°C for 24 hours and then freeze-dried to obtain a dried product.
(2) 1.00 g of the aforementioned dried product is cut into a small piece having a size of 2 mm square (cubic shape with length 2 mm × width 2 mm × height 2 mm), the small piece is immersed in 100 mL of acetone (23°C) to obtain an acetone solution, and then the acetone solution is stirred at 23°C for 24 hours using a magnetic stirrer (for example, manufactured by AS ONE CORPORATION, CHPS-170DS, dimension: 175 mm × 178 mm).
(3) An insoluble matter in the acetone solution is collected by filtration using a 200-mesh stainless steel mesh and then dried (for example, is dried by leaving the insoluble matter to stand still in a vacuum dryer for 24 hours).
(4) The element in the surface of the insoluble matter (polymer) is analyzed using a scanning electron microscope (for example, manufactured by Hitachi High-Technologies Corporation, SU6600) attached with an energy dispersive X-ray analyzer (for example, manufactured by Oxford Instruments, INCAx-act). The contents of the chlorine atom and the oxygen atom are quantified from the detected element peaks, and the molar ratio of the content of the oxygen atom/the content of the chlorine atom in the polymer is calculated.

The molar ratio of the content of the oxygen atom with respect to the content of the chlorine atom in the graft copolymer P is preferably 0.05 or more, 0.06 or more, 0.1 or more, 0.2 or more, 0.3 or more, 0.35 or more, 0.38 or more, 0.39 or more, or 0.4 or more, from the viewpoint of easily obtaining excellent adhesiveness. The molar ratio may be 0.41 or more, 0.42 or more, 0.45 or more, 0.48 or more, 0.5 or more, 0.6 or more, 0.7 or more, or 0.8 or more. The molar ratio of the content of the oxygen atom with respect to the content of the chlorine atom in the graft copolymer P is preferably 0.9 or less, 0.8 or less, 0.7 or less, 0.6 or less, 0.5 or less, 0.48 or less, 0.45 or less, 0.42 or less, or 0.41 or less, from the viewpoint of easily obtaining excellent adhesiveness. The molar ratio may be 0.4 or less, 0.39 or less, 0.38 or less, 0.35 or less, 0.3 or less, 0.2 or less, 0.1 or less, or 0.06 or less.

The adhesive composition of the present embodiment contains the graft copolymer P as a chloroprene polymer (a polymer having a structural unit derived from chloroprene). The adhesive composition of the present embodiment may contain a chloroprene polymer other than the graft copolymer P. The content of the graft copolymer P is preferably 50% by mass or more, more than 50% by mass, 70% by mass or more, 90% by mass or more, 95% by mass or more, 98% by mass or more, or 99% by mass or more, on the basis of the whole chloroprene polymer contained in the adhesive composition, from the viewpoint of easily obtaining excellent adhesiveness. The content of the chloroprene homopolymer may be 50% by mass or less, less than 50% by mass, 30% by mass or less, 10% by mass or less, 5% by mass or less, 2% by mass or less, 1% by mass or less, or substantially 0% by mass, on the basis of the whole chloroprene polymer contained in the adhesive composition.

(Surfactant)

The surfactant is not particularly limited, and examples thereof include polyvinyl alcohol; resin acid soaps such as rosin acid soap and disproportionated rosin acid soap; alkyl sulfuric acid salts such as sodium laurylsulfate; alkyl benzene sulfonic acid salts such as sodium dodecylbenzenesulfonate; alkylnaphthalenesulfonic acid salt; dialkylsulfosuccinic acid salts; polyoxyethylene alkyl ether sulfuric acid salt; salts of arylsulfonic acid formalin condensates such as a salt of β-naphthalene sulfonic acid formalin condensate; polyoxyethylene alkyl ethers such as polyoxyethylene lauryl ether; polyoxyethylene higher alcohol ether; and polyoxyethylene alkyl phenyl ethers such as polyoxyethylene nonylphenyl ether. The surfactant contained in the adhesive composition may include an anionic surfactant, and may not include an anionic surfactant. The surfactant contained in the adhesive composition may include a non-ionic surfactant, and may not include a non-ionic surfactant.

The content of the surfactant (surfactant amount; in terms of solid content) is preferably in the following range on the basis of the total amount of the adhesive composition (in terms of solid content) from the viewpoint of improving the stability of the adhesive composition. The content of the surfactant is preferably 0.5% by mass or more, 0.7% by mass or more, 0.8% by mass or more, 1% by mass or more, 1.2% by mass or more, or 1.4% by mass or more. The content of the surfactant is preferably 2.5% by mass or less, 2% by mass or less, 1.8% by mass or less, 1.6% by mass or less, 1.5% by mass or less, or 1.4% by mass or less. From these viewpoints, the content of the surfactant is preferably 0.5 to 2.5% by mass. The content of the surfactant may be 1.5% by mass or more, 1.6% by mass or more, 1.8% by mass or more, or 2% by mass or more. The content of the surfactant may be 1.2% by mass or less, 1% by mass or less, 0.8% by mass or less, or 0.7% by mass or less. The content of the surfactant can be measured by the method described in Examples.

The content of the surfactant (surfactant amount; in terms of solid content) is preferably 25 parts by mass or less, 20.5 parts by mass or less, less than 20.5 parts by mass, 20 parts by mass or less, 15 parts by mass or less, or 10 parts by mass or less, with respect to 100 parts by mass of the chloroprene polymer (including the graft copolymer P) contained in the adhesive composition or 100 parts by mass of the graft copolymer P, from the viewpoint of improving the stability of the adhesive composition.

The content of the non-ionic surfactant is preferably 1 part by mass or less, less than 1 part by mass, 0.5 parts by mass or less, less than 0.5 parts by mass, 0.1 parts by mass or less, 0.01 parts by mass or less, or substantially 0 parts by mass, with respect to 100 parts by mass of the chloroprene polymer (including the graft copolymer P) contained in the adhesive composition or 100 parts by mass of the graft copolymer P.

The content of the polyvinyl alcohol is preferably 1 part by mass or less, 0.5 parts by mass or less, 0.2 parts by mass or less, less than 0.2 parts by mass, 0.1 parts by mass or less, less than 0.1 parts by mass, 0.01 parts by mass or less, or substantially 0 parts by mass, with respect to 100 parts by mass of the chloroprene polymer (including the graft copolymer P) copolymer P contained in the adhesive composition or 100 parts by mass of the graft.

The surfactant may be added after obtaining the graft copolymer P by the aforementioned method, and can also be added at the time of polymerization of a chloroprene polymer (chloroprene polymerization step) or when the graft copolymer P is obtained (graft polymerization step).

(Other components)

The adhesive composition of the present embodiment can arbitrarily contain a tackifier resin, a thickener, an isocyanate, an ultraviolet absorber, an antioxidant, a plasticizer, a filler, a vulcanizing agent, a vulcanization accelerator, an antifoaming agent, a rust inhibitor, or the like, according to required performances. The content of the cross-linking agent (such as a vulcanization accelerator) is preferably 1 part by mass or less, 0.5 parts by mass or less, less than 0.5 parts by mass, 0.1 parts by mass or less, 0.01 parts by mass or less, or substantially 0 parts by mass, with respect to 100 parts by mass of the polymer component (including the graft copolymer P) contained in the adhesive composition or 100 parts by mass of the graft copolymer P.

[Tackifier resin]

The tackifier resin can be blended for further improving adhesiveness. The tackifier resin is not particularly limited, and examples thereof include a rosin resin, a polymerized rosin resin, an $\alpha$-pinene resin, a $\beta$-pinene resin, a terpene phenol resin, a C5 petroleum resin, a C9 petroleum resin, a C5/C9 petroleum resin, a DCPD petroleum resin, an alkylphenol resin, a xylene resin, a coumarone resin, and a coumarone-indene resin.

[Thickener]

The thickener can be blended for increasing the viscosity of the adhesive so as to improve coating properties or workability of the adhesive. The tackifier resin is not particularly limited, and examples thereof include a carboxymethyl cellulose (CMC) aqueous solution, a hydroxyl ethyl cellulose aqueous solution, polyvinyl alcohol, and a hydrophilic group-containing synthetic resin emulsion.

[Isocyanate]

The isocyanate can be blended for further improving adhesiveness. The isocyanate is not particularly limited, and examples thereof include methyl isocyanate, diphenylmethane diisocyanate, hexamethylene diisocyanate, and isophorone diisocyanate.

The content (addition amount) of the isocyanate is preferably 3 to 10 parts by mass with respect to 100 parts by mass (in terms of solid content) of the adhesive composition. By adjusting the content (addition amount) of the isocyanate in this range, it is easy to further improve the adhesiveness of the adhesive composition.

The solid content concentration of the adhesive composition of the present embodiment is 10 to 50% by mass on the basis of the total amount of the adhesive composition (including a liquid component) from the viewpoint of obtaining excellent adhesiveness. When the solid content concentration is 50% by mass or less, sufficient mechanical stability can also be obtained. The solid content concentration of the adhesive composition can be measured by the method described in Examples.

The solid content concentration of the adhesive composition is preferably more than 10% by mass, 12% by mass or more, 15% by mass or more, 18% by mass or more, or 20% by mass or more, from the viewpoint of easily obtaining excellent adhesiveness. The solid content concentration of the adhesive composition is preferably less than 50% by mass, 40% by mass or less, 30% by mass or less, 25% by mass or less, or 20% by mass or less, from the viewpoint of easily obtaining excellent adhesiveness and the viewpoint of easily obtaining sufficient mechanical stability.

The content of the liquid component (including water) or the content of water in the adhesive composition of the present embodiment is preferably 10 parts by mass or more, 50 parts by mass or more, 100 parts by mass or more, 120 parts by mass or more, more than 120 parts by mass, 150 parts by mass or more, 180 parts by mass or more, 200 parts by mass or more, 240 parts by mass or more, more than 240 parts by mass, 250 parts by mass or more, 300 parts by mass or more, or 400 parts by mass or more, with respect to 100 parts by mass of the chloroprene polymer (including the graft copolymer P) contained in the adhesive composition or 100 parts by mass of the graft copolymer P.

In the adhesive composition of the present embodiment, the acetone soluble content as measured by the following (1) to (4) is preferably 3% by mass or less, 2% by mass or less, 1% by mass or less, or less than 1% by mass, from the viewpoint of easily obtaining excellent adhesiveness. The acetone soluble content may be 0% by mass, and may be more than 0 mass. The adhesive composition of the present embodiment may contain an acetone soluble content as measured by the following (1) to (4) in a range of more than 0% by mass and 3% by mass or less.

(1) The adhesive composition is frozen at -60°C for 24 hours and then freeze-dried to obtain a dried product.
(2) 1.00 g of the aforementioned dried product is cut into a small piece having a size of 2 mm square (cubic shape with length 2 mm × width 2 mm × height 2 mm), the small piece is immersed in 100 mL of acetone (23°C) to obtain an acetone solution, and then the acetone solution is stirred at 23°C for 24 hours using a magnetic stirrer (for example, manufactured by AS ONE CORPORATION, CHPS-170DS, dimension: 175 mm × 178 mm).
(3) An insoluble matter in the acetone solution is removed by filtration using a 200-mesh stainless steel mesh, the acetone solution is then concentrated and dried by an evaporator, and the mass (A) of the residue is measured (precisely weighed).
(4) An acetone soluble content is calculated by the following formula:

Acetone soluble content = Mass (A) [g] of the residue/Mass 1.00 [g] of the dried product × 100

The aforementioned acetone soluble content can be used as an index of an amount of a polymer (such as a methacrylic acid homopolymer) obtained by polymerizing an ethylenically unsaturated carboxylic acid used when the graft copolymer P is obtained, or the like.

<Rubber article, rubber reinforcing material, and organic fiber cord attached with adhesive>

A rubber article of the present embodiment includes a rubber reinforcing material of the present embodiment. Examples of the rubber article include a tire and various belts.

The rubber reinforcing material of the present embodiment includes the adhesive composition of the present embodiment, an organic fiber cord, and a rubber member bonded to the organic fiber cord through the adhesive composition. The rubber member may cover the surface of the organic fiber cord. The organic fiber cord and the rubber member may be laminated through the adhesive composition. The rubber reinforcing material can be used as a carcass, a belt reinforcing material, or the like.

An organic fiber cord attached with an adhesive of the present embodiment includes the adhesive composition of the present embodiment and an organic fiber cord to which the adhesive composition is attached. The organic fiber cord attached with an adhesive may be a tire cord attached with an adhesive (organic fiber cord for tire reinforcement). The aforementioned rubber reinforcing material includes an organic fiber cord attached with an adhesive and a rubber member bonded to the organic fiber cord through the adhesive composition.

(Organic fiber cord)

The organic fiber cord can improve the strength of the rubber reinforcing material and may be an organic fiber cord obtained by twisting organic fibers. The organic fiber cord may be a tire cord. A material for the organic fiber cord is not particularly limited, and is preferably a thermoplastic plastic. Examples of the thermoplastic plastic include polyamide, polyester, polyolefin (such as polyethylene and polypropylene), polycarbonate, polyacrylate, a styrene-based resin (such as an ABS resin), and a vinyl chloride resin. Among these, polyester or nylon is preferred. In the rubber reinforcing material of the present embodiment, polyester, which has a high mechanical strength but is relatively difficult to be bonded to a rubber member in a conventional method, can also be used as a material for the organic fiber cord.

(Rubber member)

The rubber member is preferably a rubber member obtained by blending a blending agent, which is usually used in the rubber industry, with a rubber component. The rubber component is not particularly limited, and examples thereof include natural rubber; conjugated diene-based synthetic rubber such as polyisoprene rubber (IR), polybutadiene rubber (BR), styrene-butadiene copolymer rubber (SBR), acrylonitrile butadiene rubber (NBR), chloroprene rubber (CR), and butyl rubber (IIR); ethylene-propylene copolymer rubber (EPM); ethylene-propylene-diene copolymer rubber (EPDM); and polysiloxane rubber. Among these, natural rubber or conjugated diene-based synthetic rubber is preferred.

<Method for producing rubber reinforcing material>

A method for producing a rubber reinforcing material of the present embodiment includes a bonding step of bonding an organic fiber cord and a rubber member to each other through the adhesive composition of the present embodiment. The method for producing a rubber reinforcing material of the present embodiment is a method for bonding an organic fiber cord and a rubber member to each other.
The method for producing a rubber reinforcing material of the present embodiment may include a step of covering an organic fiber cord with an adhesive layer containing the adhesive composition of the present embodiment before the bonding step. In this case, in the bonding step, the organic fiber cord and the rubber member can be bonded to each other through the adhesive layer.
Examples of a method for forming an adhesive layer include immersion, impregnating, brush application, casting, spraying, roll coating, and knife coating. Among these, it is preferable to form an adhesive layer by impregnating the organic fiber cord with the adhesive composition. After the formation of the adhesive layer, a drying treatment may be performed at 120°C to 180°C for 5 to 10 minutes.
In the bonding step, the organic fiber cord and the rubber member can be vulcanization-bonded to each other through the adhesive composition. In the bonding step, for example, the organic fiber cord covered with the adhesive layer can be buried in unvulcanized rubber so as to be subjected to a vulcanization treatment.

**Examples**

Hereinafter, the present invention will be described by means of Examples; however, these Examples do not limit the present invention.

<Preparation of adhesive composition>

(Example 1)

[Production of chloroprene latex A]

In a reactor vessel having an internal capacity of 10 L, 150 parts by mass of water, 4.0 parts by mass of sodium dodecylbenzenesulfonate (manufactured by Kao Corporation: NEOPELEX G-65 (purity: 65% by mass)), 0.7 parts by mass of sodium salt of naphthalene sulfonic acid formalin condensate (manufactured by Kao Corporation: DEMOL N), and 0.5 parts by mass of sodium bisulfite were put and then the solid content was dissolved to obtain a solution. Thereafter, 100 parts by mass of chloroprene and 0.55 parts by mass of 1-dodecanethiol were added to the solution while the solution was stirred. Polymerization was initiated using potassium persulfate as a polymerization initiator at 10°C under a nitrogen atmosphere. When the polymerization rate reached 75%, an emulsion containing 0.02 parts by mass of thiodiphenylamine was added to terminate the polymerization. The unreacted monomer was removed under reduced pressure to obtain a chloroprene latex A (mercaptan-modified).

[Production of adhesive composition a]

While 100 parts by mass of the aforementioned chloroprene latex A was stirred, 0.5 parts by mass of methacrylic acid and 0.005 parts by mass of 1-dodecanethiol were added to this chloroprene latex A. Polymerization was initiated using 0.0005 parts by mass of potassium persulfate as a polymerization initiator at 40°C under a nitrogen atmosphere.

Polymerization was ended when the polymerization rate reached 100%. An adhesive composition a containing a graft copolymer was obtained by adding water so as to adjust the solid content concentration to 20% by mass.

(Example 2)

An adhesive composition b containing a graft copolymer was obtained in the same manner as in Example 1, except that, in Example 1, the used amount of methacrylic acid was changed to 4 parts by mass, the used amount of 1-dodecanethiol was changed to 0.04 parts by mass, and the used amount of potassium persulfate was changed to 0.004 parts by mass.

(Example 3)

An adhesive composition c containing a graft copolymer was obtained in the same manner as in Example 1, except that, in Example 1, the used amount of methacrylic acid was changed to 8 parts by mass, the used amount of 1-dodecanethiol was changed to 0.08 parts by mass, and the used amount of potassium persulfate was changed to 0.008 parts by mass.

(Example 4)

[Production of chloroprene latex B]

A chloroprene latex B (xanthogen-modified) was obtained in the same manner as in Example 1, except that, in Example 1, 0.55 parts by mass of 1-dodecanethiol was changed to 0.55 parts by mass of diethylxanthogen disulfide (manufactured by OUCHI SHINKO CHEMICAL INDUSTRIAL CO., LTD.).

[Production of adhesive composition d]

While 100 parts by mass of the aforementioned chloroprene latex B was stirred, 4 parts by mass of methacrylic acid and 0.04 parts by mass of 1-dodecanethiol were added to this chloroprene latex B. Polymerization was initiated using 0.004 parts by mass of potassium persulfate as a polymerization initiator at 40°C under a nitrogen atmosphere. Polymerization was ended when the polymerization rate reached 100%. Thereby, an adhesive composition d containing a graft copolymer was obtained.

(Example 5)

[Production of chloroprene latex C]

A chloroprene latex C (sulfur-modified) was obtained in the same manner as in Example 1, except that, in Example 1, 0.55 parts by mass of 1-dodecanethiol was changed to 0.55 parts by mass of sulfur.

[Production of adhesive composition e]

While 100 parts by mass of the aforementioned chloroprene latex C was stirred, 4 parts by mass of methacrylic acid and 0.04 parts by mass of 1-dodecanethiol were added to this chloroprene latex C. Polymerization was initiated using 0.004 parts by mass of potassium persulfate as a polymerization initiator at 40°C under a nitrogen atmosphere. Polymerization was ended when the polymerization rate reached 100%. Thereby, an adhesive composition e containing a graft copolymer was obtained.

(Example 6)

An adhesive composition f containing a graft copolymer was obtained in the same manner as in Example 2, except that, in Example 2, methacrylic acid was changed to acrylic acid.

(Example 7)

[Production of chloroprene latex D]

A chloroprene latex D (mercaptan-modified) was obtained in the same manner as in Example 1, except that, in Example 1, the used amount of sodium dodecylbenzenesulfonate (manufactured by Kao Corporation: NEOPELEX G-65 (purity: 65% by mass)) was changed from 4.0 parts by mass to 2.0 parts by mass.

[Production of adhesive composition g]

While 100 parts by mass of the aforementioned chloroprene latex D was stirred, 4 parts by mass of methacrylic acid and 0.04 parts by mass of 1-dodecanethiol were added to this chloroprene latex D. Polymerization was initiated using 0.004 parts by mass of potassium persulfate as a polymerization initiator at 40°C under a nitrogen atmosphere. Polymerization was ended when the polymerization rate reached 100%. Thereby, an adhesive composition g containing a graft copolymer was obtained.

(Example 8)

[Production of chloroprene latex E]

A chloroprene latex E (mercaptan-modified) was obtained in the same manner as in Example 1, except that, in Example 1, the used amount of sodium dodecylbenzenesulfonate (manufactured by Kao Corporation: NEOPELEX G-65 (purity: 65% by mass)) was changed from 4.0 parts by mass to 6.0 parts by mass.

[Production of adhesive composition h]

While 100 parts by mass of the aforementioned chloroprene latex E was stirred, 4 parts by mass of methacrylic acid and 0.04 parts by mass of 1-dodecanethiol were added to this chloroprene latex E. Polymerization was initiated using 0.004 parts by mass of potassium persulfate as a polymerization initiator at 40°C under a nitrogen atmosphere. Polymerization was ended when the polymerization rate reached 100%. Thereby, an adhesive composition h containing a graft copolymer was obtained.

(Example 9)

[Production of chloroprene latex F]

A chloroprene latex F was obtained in the same manner as in Example 1, except that, in Example 1, 4.0 parts by mass of sodium dodecylbenzenesulfonate (manufactured by Kao Corporation: NEOPELEX G-65 (purity: 65% by mass)) was changed to 4.0 parts by mass of polyvinyl alcohol (manufactured by Denka Company Limited: B-05).

[Production of adhesive composition i]

While 100 parts by mass of the aforementioned chloroprene latex F was stirred, 4 parts by mass of methacrylic acid and 0.04 parts by mass of 1-dodecanethiol were added to this chloroprene latex F. Polymerization was initiated using 0.004 parts by mass of potassium persulfate as a polymerization initiator at 40°C under a nitrogen atmosphere. Polymerization was ended when the polymerization rate reached 100%. Thereby, an adhesive composition i containing a graft copolymer was obtained.

(Example 10)

[Production of chloroprene latex G]

A chloroprene latex G (mercaptan-modified) was obtained in the same manner as in Example 1, except that the polymerization initiation temperature when the chloroprene latex A of Example 1 was obtained was changed to 40°C.

[Production of adhesive composition j]

While 100 parts by mass of the aforementioned chloroprene latex G was stirred, 4 parts by mass of methacrylic acid and 0.04 parts by mass of 1-dodecanethiol were added to this chloroprene latex G. Polymerization was initiated using 0.004 parts by mass of potassium persulfate as a polymerization initiator at 40°C under a nitrogen atmosphere. Polymerization was ended when the polymerization rate reached 100%. Thereby, an adhesive composition j containing a graft copolymer was obtained.

(Comparative Example 1)

An adhesive composition k containing a graft copolymer was obtained in the same manner as in Example 1, except that, in Example 1, the used amount of methacrylic acid was changed to 0.3 parts by mass, the used amount of 1-dodecanethiol was changed to 0.003 parts by mass, and the used amount of potassium persulfate was changed to 0.0003 parts by mass.

(Comparative Example 2)

An adhesive composition l containing a graft copolymer was obtained in the same manner as in Example 1, except that, in Example 1, the used amount of methacrylic acid was changed to 12 parts by mass, the used amount of 1-dodecanethiol was changed to 0.12 parts by mass, and the used amount of potassium persulfate was changed to 0.012 parts by mass.

(Comparative Example 3)

An adhesive composition m, which was obtained by adding water to a carboxyl group-modified chloroprene latex (manufactured by Denka Company Limited: LC-501, random copolymer) so as to adjust the solid content concentration to 20% by mass, was used.

(Comparative Example 4)

A chloroprene latex A was produced in the same manner as in Example 1. 4.0 parts by mass of polymethacrylic acid (PMA, manufactured by FUJIFILM Wako Pure Chemical Corporation) was added to 100 parts by mass of the chloroprene latex A and then stirred at 25°C until the polymethacrylic acid was dissolved. Thereby, an adhesive composition n was obtained.

(Comparative Example 5)

An adhesive composition o containing a graft copolymer was obtained by diluting the adhesive composition a of Example 1 with pure water so as to adjust the solid content concentration to 5% by mass.

(Comparative Example 6)

An adhesive composition p containing a graft copolymer was obtained by concentrating the adhesive composition a of Example 1 so as to adjust the solid content concentration to 55% by mass.

<Polymerization rate>

The polymerization rate of the aforementioned copolymer was calculated by the following formula. Note that the total charged amount of the monomer is regarded as 100 parts by mass, and the evaporation residue indicates the non-volatile component excluding the copolymer contained in the adhesive composition.

Polymerization rate [%] of copolymer = (Total charged amount [parts by mass] of monomer $\times$ Solid content concentration [% by mass] - Evaporation residue [parts by mass])/Total charged amount [parts by mass] of monomer $\times$ 100

<Solid content concentration of adhesive composition>

The solid content concentration of the adhesive composition was measured by the following procedure. First, a mass X [g] of only an aluminum dish was obtained. Next, 2 g of the adhesive composition was put in the aluminum dish, and then a total mass Y [g] of the adhesive composition and the aluminum dish was obtained. Subsequently, a mass Z [g] after the aluminum dish in which the adhesive composition had been put was dried for 1 hour by a hot-air dryer set at 125°C was obtained, and then the solid content concentration [% by mass] was calculated on the basis of the following formula.

$$\text{Solid content concentration} = \{(Z - X)/(Y - X)\} \times 100$$

<Evaluation>

(Molar ratio of content of oxygen atom with respect to content of chlorine atom in polymer)

The aforementioned adhesive composition was frozen at -60°C for 24 hours and then freeze-dried to obtain a dried product. 1.00 g of the dried product was cut into 2 mm square (cubic shape with length 2 mm × width 2 mm × height 2 mm) to obtain a small piece. The small piece was immersed (dispersed) in 100 mL of acetone (23°C) at 23°C to obtain an acetone solution, and then the acetone solution was stirred for 24 hours using a magnetic stirrer (manufactured by AS ONE CORPORATION, CHPS-170DS, dimension: 175 mm × 178 mm). An insoluble matter (polymer) in the acetone solution was collected by filtration using a 200-mesh stainless steel mesh and then dried by leaving the insoluble matter to stand still in a vacuum dryer for 24 hours. The element in the surface of the insoluble matter (polymer) was analyzed using a scanning electron microscope (manufactured by Hitachi High-Technologies Corporation, SU6600) attached with an energy dispersive X-ray analyzer (manufactured by Oxford Instruments, INCAx-act). The contents of the chlorine atom and the oxygen atom were quantified. Based on the measurement result, the molar ratio of the content of the oxygen atom/the content of the chlorine atom in the polymer was calculated. Results are presented in Table 1 and Table 2. In the tables, the molar ratio of the oxygen atom in a case where the amount of the chlorine atom was regarded as "1" was described.

(Surfactant amount)

The aforementioned adhesive composition was diluted 200-fold with pure water and then separated by centrifugation to obtain a supernatant, and 25 μL of the supernatant was subjected to quantitative analysis by liquid chromatography. The surfactant amount in the adhesive composition was converted using a standard curve on the basis of the measurement value. Results are presented in Table 1 and Table 2.

(Acetone soluble content)

The aforementioned adhesive composition was frozen at -60°C for 24 hours and then freeze-dried to obtain a dried product. 1.00 g of the dried product was cut into 2 mm square (cubic shape with length 2 mm × width 2 mm × height 2 mm) to obtain a small piece. The small piece was immersed (dispersed) in 100 mL of acetone (23°C) at 23°C to obtain an acetone solution, and then the acetone solution was stirred for 24 hours using a magnetic stirrer (manufactured by AS ONE CORPORATION, CHPS-170DS, dimension: 175 mm × 178 mm). An insoluble matter (polymer or the like) in the acetone solution was removed by filtration using a 200-mesh stainless steel mesh. The acetone solution was concentrated and dried by an evaporator, and then the mass (A) of the residue was measured (precisely weighed). The acetone soluble content was calculated by dividing the mass (A) of the residue by the mass of the dried product according to the following formula. Results are presented in Table 1 and Table 2.

Acetone soluble content [% by mass] = Mass (A) [g] of the residue/Mass (1.00 [g]) of the dried product × 100

(Adhesiveness)

The adhesive force of the adhesive composition was measured according to JIS K6301. As an adhesive composition using resorcinol and formaldehyde, an RFL-based adhesive composition was prepared by mixing 16.7 parts by mass of chloroprene latex (manufactured by Denka Company Limited, trade name: LM-61, solid content: 60.0% by mass, chloroprene latex not containing a graft copolymer), 1.5 parts by mass of resorcinol, 1.5 parts by mass of formaldehyde, 0.3 parts by mass of sodium hydroxide, and 80 parts by mass of water, the adhesive force as measured using this adhesive composition was regarded as 100, and the adhesive force as measured using each adhesive composition mentioned above was comparatively evaluated. Results are presented in Table 1 and Table 2. Higher numerical values indicate satisfactory results. As for Comparative Example 6, the viscosity of the adhesive composition was high and a test sample could not be prepared, so that the adhesive force could not be measured.

[Table 1]

| | | Unit | Example | | | | | | | | | |
|---|---|---|---|---|---|---|---|---|---|---|---|---|---|
| | | | 1 | 2 | 3 | 4 | 5 | 6 | 7 | 8 | 9 | 10 |
| Kind of adhesive composition | | - | a | b | c | d | e | f | g | h | i | j |
| Structure of copolymer | | - | Graft | Graft | Graft | Graft | Graft | Graft | Graft | Graft | Graft | Graft |
| Chloroprene latex | A (mercaptan-modified) | Parts by mass | 100 | 100 | 100 | 0 | 0 | 100 | 0 | 0 | 0 | 0 |
| | B (xanthogen-modified) | | 0 | 0 | 0 | 100 | 0 | 0 | 0 | 0 | 0 | 0 |
| | C (sulfur-modified) | | 0 | 0 | 0 | 0 | 100 | 0 | 0 | 0 | 0 | 0 |
| | D (mercaptan-modified) | | 0 | 0 | 0 | 0 | 0 | 0 | 100 | 0 | 0 | 0 |
| | E (mercaptan-modified) | | 0 | 0 | 0 | 0 | 0 | 0 | 0 | 100 | 0 | 0 |
| | F (PVA) | | 0 | 0 | 0 | 0 | 0 | 0 | 0 | 0 | 100 | 0 |
| | G (mercaptan-modified) | | 0 | 0 | 0 | 0 | 0 | 0 | 0 | 0 | 0 | 100 |
| Graft polymerization | Methacrylic acid | Parts by mass | 0.5 | 4 | 8 | 4 | 4 | 0 | 4 | 4 | 4 | 4 |
| | Acrylic acid | | 0 | 0 | 0 | 0 | 0 | 4 | 0 | 0 | 0 | 0 |
| | 1-Dodecanethiol | | 0.005 | 0.04 | 0.08 | 0.04 | 0.04 | 0.04 | 0.04 | 0.04 | 0.04 | 0.04 |
| | Potassium persulfate | | 0.0005 | 0.004 | 0.008 | 0.004 | 0.004 | 0.004 | 0.004 | 0.004 | 0.004 | 0.004 |
| | Polymerization rate (calculated from solid content concentration) | % | 100 | 100 | 100 | 100 | 100 | 100 | 100 | 100 | 100 | 100 |
| Molar ratio in graft copolymer (content of oxygen atom/content of chlorine atom) | | - | 0.06 | 0.38 | 0.82 | 0.41 | 0.40 | 0.48 | 0.42 | 0.41 | 0.39 | 0.40 |
| Solid content concentration | | % by mass | 20 | 20 | 20 | 20 | 20 | 20 | 20 | 20 | 20 | 20 |
| Surfactant amount | | % by mass | 1.6 | 1.5 | 1.4 | 1.5 | 1.5 | 1.4 | 0.7 | 2.5 | 1.5 | 1.4 |
| Acetone soluble content | | % by mass | 1> | 1> | 1> | 1> | 1> | 1> | 1> | 1> | 1> | 1> |
| Adhesiveness | | - | 103 | 105 | 110 | 104 | 108 | 109 | 106 | 108 | 106 | 108 |

[Table 2]

| | Unit | Comparative Example | | | | | |
|---|---|---|---|---|---|---|---|
| | | 1 | 2 | 3 | 4 | 5 | 6 |
| Kind of adhesive composition | - | k | l | m | n | o | p |
| Structure of polymer or the like | - | Graft | Graft | Random | Mixture of CR latex and PMA | Graft | Graft |
| Chloroprene latex — A (mercaptan-modified) | Parts by mass | 100 | 100 | 0 | 100 | 100 | 100 |
| Chloroprene latex — LC-501 (carboxyl group-modified) | Parts by mass | 0 | 0 | 100 | 0 | 0 | 0 |
| Graft polymerization — Methacrylic acid | Parts by mass | 0.3 | 12 | 0 | 0 | 0.5 | 0.5 |
| Graft polymerization — 1-Dodecanethiol | Parts by mass | 0.003 | 0.12 | 0 | 0 | 0.005 | 0.005 |
| Graft polymerization — Potassium persulfate | Parts by mass | 0.0003 | 0.012 | 0 | 0 | 0.0005 | 0.0005 |
| Graft polymerization — Polymerization rate (calculated from solid content concentration) | % | 100 | 100 | - | - | 100 | 100 |
| Molar ratio in polymer (content of oxygen atom/content of chlorine atom) | - | 0.03 | 1.18 | 0.05 | 0.39 | 0.06 | 0.06 |
| Solid content concentration | % by mass | 20 | 20 | 20 | 20 | 5 | 55 |
| Surfactant amount | % by mass | 1.6 | 1.3 | 1.2 | 1.5 | 0.6 | 3.2 |
| Acetone soluble content | % by mass | 1> | 1> | 1> | 15 | 1> | 1> |
| Adhesiveness | - | 90 | 92 | 82 | 80 | 75 | Unmeasurable |

<Preparation of tire cord attached with adhesive>

The adhesive composition of each Example mentioned above was attached to a tire cord (made of nylon-6,6) and then dried at 180°C for 1 minute. Thereafter, a tension (cord tension) of 1 to 2 kg/thread was applied to the tire cord, and then a thermal treatment was performed at 240°C for 2 minutes using a thermal treatment machine, thereby obtaining a tire cord attached with an adhesive.

**Claims**

1. A rubber reinforcing material comprising:

an adhesive composition;

an organic fiber cord; and

a rubber member bonded to the organic fiber cord through the adhesive composition, wherein

the adhesive composition comprises: a graft copolymer; and a surfactant, wherein

the graft copolymer comprises a chloroprene polymer chain and a graft chain bonded to the chloroprene polymer chain,

the graft chain comprises a structural unit derived from an ethylenically unsaturated carboxylic acid,

a content of the structural unit derived from the ethylenically unsaturated carboxylic acid is 50% by mass or more on the basis of the whole graft chain,

a molar ratio of a content of oxygen atom with respect to a content of chlorine atom in the graft copolymer is 0.04 to 1, wherein the contents of the chlorine atom and the oxygen atom in the graft copolymer is measured using the method described in the description, and

a solid content concentration of the adhesive composition is 10 to 50% by mass.

2. The rubber reinforcing material according to claim 1, wherein the ethylenically unsaturated carboxylic acid comprises at least one selected from the group consisting of acrylic acid and methacrylic acid.

3. The rubber reinforcing material according to claim 2, wherein a total amount of a structural unit derived from acrylic acid and a structural unit derived from methacrylic acid is 50% by mass or more on the basis of the whole graft chain.

4. The rubber reinforcing material according to any one of claims 1 to 3, wherein an acetone soluble content as measured by the following (1) to (4) in the adhesive composition is 3% by mass or less:

(1) the adhesive composition is frozen at -60°C for 24 hours and then freeze-dried to obtain a dried product;

(2) 1.00 g of the dried product is cut into a small piece having a size of 2 mm square, the small piece is immersed in 100 mL of acetone to obtain an acetone solution, and then the acetone solution is stirred at 23°C for 24 hours using a magnetic stirrer;

(3) an insoluble matter in the acetone solution is removed by filtration using a 200-mesh stainless steel mesh, the acetone solution is then concentrated and dried by an evaporator, and the mass of a residue is measured; and

(4) an acetone soluble content is calculated by the following formula:

Acetone soluble content = Mass [g] of the residue/Mass 1.00 [g] of the dried product $\times$ 100

5. The rubber reinforcing material according to any one of claims 1 to 4, wherein a content of the graft copolymer is more than 50% by mass on the basis of the total content of chloroprene-containing polymer contained in the adhesive composition.

6. The rubber reinforcing material according to claim 5, wherein the adhesive composition further comprises a chloroprene polymer other than the graft copolymer.

7. The rubber reinforcing material according to claim 6, wherein the chloroprene polymer other than the graft copolymer is a chloroprene homopolymer and its content is less than 50% by mass on the basis of the total content of chloroprene-containing polymer contained in the adhesive composition.

8. A rubber article comprising the rubber reinforcing material according to any one of claims 1 to 7.

9. The rubber article according to claim 8, the rubber article being a tire.

10. A method for producing a rubber reinforcing material, the method comprising a step of bonding an organic fiber cord and a rubber member to each other through the adhesive composition, wherein

the adhesive composition comprises a graft copolymer and a surfactant,

wherein

the graft copolymer comprises a chloroprene polymer chain and a graft chain bonded to the chloroprene polymer chain,

the graft chain comprises a structural unit derived from an ethylenically unsaturated carboxylic acid,

a content of the structural unit derived from the ethylenically unsaturated carboxylic acid is 50% by mass or more on the basis of the whole graft chain,

a molar ratio of a content of oxygen atom with respect to a content of chlorine atom in the graft copolymer is 0.04 to 1, wherein the contents of the chlorine atom and the oxygen atom in the graft copolymer is measured using the method described in the description, and

a solid content concentration of the adhesive composition is 10 to 50% by mass.

11. The method for producing a rubber reinforcing material according to claim 10, wherein the ethylenically unsaturated carboxylic acid comprises at least one selected from the group consisting of acrylic acid and methacrylic acid.

12. The method for producing a rubber reinforcing material according to claim 11, wherein a total amount of a structural unit derived from acrylic acid and a structural unit derived from methacrylic acid is 50% by mass or more on the basis of the whole graft chain.

13. The method for producing a rubber reinforcing material according to any one of claims 10 to 12, wherein an acetone soluble content as measured by the following (1) to (4) in the adhesive composition is 3% by mass or less:

(1) the adhesive composition is frozen at -60°C for 24 hours and then freeze-dried to obtain a dried product;
(2) 1.00 g of the dried product is cut into a small piece having a size of 2 mm square, the small piece is immersed in 100 mL of acetone to obtain an acetone solution, and then the acetone solution is stirred at 23°C for 24 hours using a magnetic stirrer;
(3) an insoluble matter in the acetone solution is removed by filtration using a 200-mesh stainless steel mesh, the acetone solution is then concentrated and dried by an evaporator, and the mass of a residue is measured; and
(4) an acetone soluble content is calculated by the following formula:

Acetone soluble content = Mass [g] of the residue/Mass 1.00 [g] of the dried product × 100.

14. The method for producing a rubber reinforcing material according to any one of claims 10 to 13, wherein a content of the graft copolymer is more than 50% by mass on the basis of the total content of chloroprene-containing polymer contained in the adhesive composition.

**Patentansprüche**

1. Kautschukverstärkungsmaterial, umfassend:

eine Klebstoffzusammensetzung;
einen organischen Fasercord; und
ein Kautschukelement, das mittels der Klebstoffzusammensetzung an den organischen Fasercord gebunden ist, wobei
die Klebstoffzusammensetzung umfasst: ein Pfropfcopolymer; und ein Tensid, wobei
das Pfropfcopolymer eine Chloroprenpolymerkette und eine Pfropfkette, die an die Chloroprenpolymerkette gebunden ist, umfasst,
die Pfropfkette eine Struktureinheit umfasst, die von einer ethylenisch ungesättigten Carbonsäure abgeleitet ist,
ein Gehalt der Struktureinheit, die von der ethylenisch ungesättigten Carbonsäure abgeleitet ist, 50 Massen-% oder mehr, bezogen auf die gesamte Pfropfkette, beträgt,
ein Molverhältnis von einem Gehalt an Sauerstoffatom zu einem Gehalt an Chloratom in dem Pfropfcopolymer 0,04 bis 1 beträgt, wobei die Gehalte an Chloratom und an Sauerstoffatom in dem Pfropfcopolymer unter Verwendung des in der Beschreibung beschriebenen Verfahrens gemessen werden, und
eine Feststoffgehaltskonzentration der Klebstoffzusammensetzung 10 bis 50 Massen-% beträgt.

2. Kautschukverstärkungsmaterial gemäß Anspruch 1, wobei die ethylenisch ungesättigte Carbonsäure mindestens eine umfasst, die aus der Gruppe ausgewählt ist, die aus Acrylsäure und Methacrylsäure besteht.

3. Kautschukverstärkungsmaterial gemäß Anspruch 2, wobei eine Gesamtmenge einer Struktureinheit, die von Acrylsäure abgeleitet ist, und einer Struktureinheit, die von Methacrylsäure abgeleitet ist, 50 Massen-% oder mehr, bezogen auf die gesamte Pfropfkette, beträgt.

4. Kautschukverstärkungsmaterial gemäß einem der Ansprüche 1 bis 3, wobei ein acetonlöslicher Gehalt, gemessen durch die folgenden (1) bis (4), in der Klebstoffzusammensetzung 3 Massen-% oder weniger beträgt:

(1) die Klebstoffzusammensetzung wird für 24 Stunden bei -60°C eingefroren und dann gefriergetrocknet, um ein getrocknetes Produkt zu erhalten;
(2) 1,00 g des getrockneten Produkts werden in ein kleines Stück mit einer Größe von 2 mm im Quadrat geschnitten, das kleine Stück wird in 100 ml Aceton eingetaucht, um eine Acetonlösung zu erhalten, und dann wird die Acetonlösung bei 23°C für 24 Stunden unter Verwendung eines Magnetrührers gerührt;
(3) ein unlösliches Material in der Acetonlösung wird durch Filtration unter Verwendung eines 200-mesh-Edelstahlnetzes entfernt, die Acetonlösung wird dann konzentriert und mittels eines Verdampfers getrocknet und die Masse eines Rückstands wird gemessen; und
(4) ein acetonlöslicher Gehalt wird nach der folgenden Formel berechnet:

Acetonlöslicher Gehalt = Masse [g] des Rückstands/Masse 1,00 [g] des getrockneten Produkts $\times$ 100.

5. Kautschukverstärkungsmaterial gemäß einem der Ansprüche 1 bis 4, wobei ein Gehalt des Pfropfcopolymers mehr als 50 Massen-%, bezogen auf den Gesamtgehalt des in der Klebstoffzusammensetzung enthaltenen chloroprenhaltigen Polymers, beträgt.

6. Kautschukverstärkungsmaterial gemäß Anspruch 5, wobei die Klebstoffzusammensetzung ferner ein Chloroprenpolymer, das von dem Pfropfcopolymer verscheiden ist, umfasst.

7. Kautschukverstärkungsmaterial gemäß Anspruch 6, wobei das Chloroprenpolymer, das von dem Pfropfcopolymer verscheiden ist, ein Chloroprenhomopolymer ist und sein Gehalt weniger als 50 Massen-%, bezogen auf den Gesamtgehalt des in der Klebstoffzusammensetzung enthaltenen chloroprenhaltigen Polymers, beträgt.

8. Kautschukartikel, umfassend das Kautschukverstärkungsmaterial gemäß einem der Ansprüche 1 bis 7.

9. Kautschukartikel gemäß Anspruch 8, wobei der Kautschukartikel ein Reifen ist.

10. Verfahren zur Herstellung eines Kautschukverstärkungsmaterials, wobei das Verfahren einen Schritt des Verbindens eines organischen Fasercords und eines Kautschukelements miteinander mittels der Klebstoffzusammensetzung umfasst, wobei

die Klebstoffzusammensetzung ein Pfropfcopolymer und ein Tensid umfasst, wobei
das Pfropfcopolymer eine Chloroprenpolymerkette und eine Pfropfkette, die an die Chloroprenpolymerkette gebunden ist, umfasst,
die Pfropfkette eine Struktureinheit umfasst, die von einer ethylenisch ungesättigten Carbonsäure abgeleitet ist,
ein Gehalt der Struktureinheit, die von der ethylenisch ungesättigten Carbonsäure abgeleitet ist, 50 Massen-% oder mehr, bezogen auf die gesamte Pfropfkette, beträgt,
ein Molverhältnis von einem Gehalt an Sauerstoffatom zu einem Gehalt an Chloratom in dem Pfropfcopolymer 0,04 bis 1 beträgt, wobei die Gehalte an Chloratom und an Sauerstoffatom in dem Pfropfcopolymer unter Verwendung des in der Beschreibung beschriebenen Verfahrens gemessen werden, und
eine Feststoffkonzentration der Klebstoffzusammensetzung 10 bis 50 Massen-% beträgt.

11. Verfahren zur Herstellung eines Kautschukverstärkungsmaterials gemäß Anspruch 10, wobei die ethylenisch ungesättigte Carbonsäure mindestens eine umfasst, die aus der Gruppe ausgewählt ist, die aus Acrylsäure und Methacrylsäure besteht.

12. Verfahren zur Herstellung eines Kautschukverstärkungsmaterials gemäß Anspruch 11, eine Gesamtmenge einer Struktureinheit, die von Acrylsäure abgeleitet ist, und einer Struktureinheit, die von Methacrylsäure abgeleitet ist, 50 Massen-% oder mehr, bezogen auf die gesamte Pfropfkette, beträgt.

**13.** Verfahren zur Herstellung eines Kautschukverstärkungsmaterials gemäß einem der Ansprüche 10 bis 12, wobei ein acetonlöslicher Gehalt, gemessen durch die folgenden (1) bis (4), in der Klebstoffzusammensetzung 3 Massen-% oder weniger beträgt:

(1) die Klebstoffzusammensetzung wird für 24 Stunden bei -60°C eingefroren und dann gefriergetrocknet, um ein getrocknetes Produkt zu erhalten;
(2) 1,00 g des getrockneten Produkts werden in ein kleines Stück mit einer Größe von 2 mm im Quadrat geschnitten, das kleine Stück wird in 100 ml Aceton eingetaucht, um eine Acetonlösung zu erhalten, und dann wird die Acetonlösung bei 23°C für 24 Stunden unter Verwendung eines Magnetrührers gerührt;
(3) ein unlösliches Material in der Acetonlösung wird durch Filtration unter Verwendung eines 200-mesh-Edelstahlnetzes entfernt, die Acetonlösung wird dann konzentriert und mittels eines Verdampfers getrocknet und die Masse eines Rückstands wird gemessen; und
(4) ein acetonlöslicher Gehalt wird nach der folgenden Formel berechnet:

Acetonlöslicher Gehalt = Masse [g] des Rückstands/Masse 1,00 [g] des getrockneten Produkts $\times$ 100.

**14.** Verfahren zur Herstellung eines Kautschukverstärkungsmaterials gemäß einem der Ansprüche 10 bis 13, wobei ein Gehalt des Pfropfcopolymers mehr als 50 Massen-%, bezogen auf den Gesamtgehalt des in der Klebstoffzusammensetzung enthaltenen chloroprenhaltigen Polymers, beträgt.

## Revendications

**1.** Matériau de renforcement pour caoutchouc comprenant :

une composition adhésive ;
un câble en fibres organiques ; et
un élément en caoutchouc lié au câble en fibres organiques par l'intermédiaire de la composition adhésive, dans lequel
la composition adhésive comprend : un copolymère greffé ; et un tensioactif, dans lequel
le copolymère greffé comprend une chaîne polymère de chloroprène et une chaîne greffée liée à la chaîne polymère de chloroprène,
la chaîne greffée comprend un motif structural dérivé d'un acide carboxylique à insaturations éthyléniques,
une teneur en motif structural dérivé de l'acide carboxylique à insaturations éthyléniques est de 50 % en masse ou plus par rapport de la chaîne greffée entière,
un rapport molaire d'une teneur en atome d'oxygène par rapport à une teneur en atome de chlore dans le copolymère greffé allant de 0,04 à 1, les teneurs en atome de chlore et en atome d'oxygène dans le copolymère greffé sont mesurées en utilisant le procédé décrit dans la description, et
une concentration en matière solide de la composition adhésive allant de 10 à 50 % en masse.

**2.** Matériau de renforcement pour caoutchouc selon la revendication 1, dans lequel l'acide carboxylique à insaturations éthyléniques comprend au moins un sélectionné dans le groupe consistant en l'acide acrylique et l'acide méthacrylique.

**3.** Matériau de renforcement pour caoutchouc selon la revendication 2, dans lequel la quantité totale d'un motif structural dérivé de l'acide acrylique et d'un motif structural dérivé de l'acide méthacrylique est de 50 % en masse ou plus sur la base de la chaîne greffée totale.

**4.** Matériau de renforcement pour caoutchouc selon l'une quelconque des revendications 1 à 3, dans lequel la teneur en substance soluble dans l'acétone telle que mesurée par les étapes (1) à (4) suivantes dans la composition adhésive est de 3 % en masse ou moins :

(1) la composition adhésive est congelée à -60 °C pendant 24 heures et ensuite lyophilisée pour obtenir un produit sec ;
(2) 1,00 g du produit sec est coupé en un petit morceau d'une taille de 2 mm carré, le petit morceau est immergé dans 100 ml d'acétone pour obtenir une solution d'acétone, et ensuite la solution d'acétone est agitée à 23 °C pendant 24 heures au moyen d'un agitateur magnétique ;

(3) une matière insoluble dans la solution d'acétone est éliminée par filtration au moyen d'une maille en acier inoxydable de 200 mesh, la solution d'acétone est ensuite concentrée et séchée par un évaporateur, et la masse d'un résidu est mesurée ; et

(4) une teneur en substance soluble dans l'acétone est calculée par la formule suivante :

teneur en substance soluble dans l'acétone = masse [g] du résidu/masse de 1,00 [g] du produit sec $\times$ 100

**5.** Matériau de renforcement pour caoutchouc selon l'une quelconque des revendications 1 à 4, dans lequel la teneur en copolymère greffé est supérieure à 50 % en masse sur la base de la teneur totale en polymère contenant du chloroprène contenue dans la composition adhésive.

**6.** Matériau de renforcement pour caoutchouc selon la revendication 5, dans lequel la composition adhésive comprend en outre un polymère de chloroprène autre que le copolymère greffé.

**7.** Matériau de renforcement pour caoutchouc selon la revendication 6, dans lequel le polymère de chloroprène autre que le copolymère greffé est un homopolymère de chloroprène et sa teneur est inférieure à 50 % en masse sur la base de la teneur totale en polymère contenant du chloroprène contenue dans la composition adhésive.

**8.** Article en caoutchouc comprenant le matériau de renforcement pour caoutchouc selon l'une quelconque des revendications 1 à 7.

**9.** Article en caoutchouc selon la revendication 8, l'article en caoutchouc étant un pneu.

**10.** Procédé de production d'un matériau de renforcement pour caoutchouc, le procédé comprenant une étape de liaison d'un câble en fibres organiques et d'un élément en caoutchouc l'un à l'autre par l'intermédiaire de la composition adhésive, dans lequel

la composition adhésive comprend un copolymère greffé et un tensioactif, dans lequel
le copolymère greffé comprend une chaîne polymère de chloroprène et une chaîne greffée liée à la chaîne polymère de chloroprène,
la chaîne greffée comprend un motif structural dérivé d'un acide carboxylique à insaturations éthyléniques,
une teneur en motif structural dérivé de l'acide carboxylique à insaturations éthyléniques est de 50 % en masse ou plus par rapport à la chaîne greffée entière,
un rapport molaire d'une teneur en atome d'oxygène par rapport à une teneur en atome de chlore dans le copolymère greffé allant de 0,04 à 1, dans lequel les teneurs en atome de chlore et en atome d'oxygène dans le copolymère greffé sont mesurées en utilisant le procédé décrit dans la description, et
une concentration en matière solide de la composition adhésive allant de 10 à 50 % en masse.

**11.** Procédé de production d'un matériau de renforcement pour caoutchouc selon la revendication 10, dans lequel l'acide carboxylique à insaturations éthyléniques comprend au moins un sélectionné dans le groupe consistant en l'acide acrylique et l'acide méthacrylique.

**12.** Procédé de production d'un matériau de renforcement pour caoutchouc selon la revendication 11, dans lequel la quantité totale d'un motif structural dérivé de l'acide acrylique et d'un motif structural dérivé de l'acide méthacrylique est de 50 % en masse ou plus sur la base de la chaîne greffée totale.

**13.** Procédé de production d'un matériau de renforcement pour caoutchouc selon l'une quelconque des revendications 10 à 12, dans lequel la teneur en substance soluble dans l'acétone telle que mesurée par les étapes (1) à (4) suivantes dans la composition adhésive est de 3 % en masse ou moins :

(1) la composition adhésive est congelée à -60 °C pendant 24 heures et ensuite lyophilisée pour obtenir un produit sec ;
(2) 1,00 g du produit sec est coupé en un petit morceau d'une taille de 2 mm carré, le petit morceau est immergé dans 100 ml d'acétone pour obtenir une solution d'acétone, et ensuite la solution d'acétone est agitée à 23 °C pendant 24 heures au moyen d'un agitateur magnétique ;

(3) une matière insoluble dans la solution d'acétone est éliminée par filtration au moyen d'une maille en acier inoxydable de 200 mesh, la solution d'acétone est ensuite concentrée et séchée par un évaporateur, et la masse d'un résidu est mesurée ; et

(4) une teneur en substance soluble dans l'acétone est calculée par la formule suivante :

teneur en substance soluble dans l'acétone = masse [g] du résidu/masse de 1,00 [g] du produit sec $\times$ 100.

14. Procédé de production d'un matériau de renforcement pour caoutchouc selon l'une quelconque des revendications 10 à 13, dans lequel la teneur en copolymère greffé est supérieure à 50 % en masse sur la base de la teneur totale en polymère contenant du chloroprène contenue dans la composition adhésive.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 58002370 A
- JP 60092371 A
- JP 60096674 A

- JP 63249784 A
- JP 63061433 B
- EP 2426253 A